# NOUVEAU FASCICULE DE BREVET EUROPEEN

(11) **EP 0 760 076 B2**
(45) Date de publication et mention de la décision concernant l'opposition: **06.06.2007**
(45) Mention de la délivrance du brevet: 19.04.2000
(21) Numéro de dépôt: 96901839.9
(22) Date de dépôt: 23.01.1996
(51) Int. Cl.: F27B 13/02, C04B 35/52

(54) **FOUR DE CUISSON A FEU TOURNANT AVEC VOILE INTERIEUR REFROIDI**
RINGKAMMEROFEN MIT EINER GEKÜHLTEN INNENWAND
FIRING FURNACE WITH A REVOLVING FIRING ZONE AND A COOLED INTERNAL WALL

(30) Priorité: 27.01.1995 FR 9501186
(43) Date de publication de la demande: 05.03.1997
(73) Titulaire: ALUMINIUM PECHINEY, 92400 Courbevoie (FR)
(72) Inventeur: CHARMIER, François, F-38340 Voreppe (FR); BREME, Philippe, F-38500 Voiron (FR)
(74) Mandataire: Mougeot, Jean-Claude
(86) Numéro de dépôt international: PCT/FR1996/000112
(87) Numéro de publication internationale: WO 1996/023186

(56) Documents cités:
- EP-A- 0 541 165
- DE-A- 2 519 738
- GB-A- 241 303
- US-A- 5 779 970
- J. Auton, W.F. Crowell, R.R. Ebersole, W.W. Ellison, J. Kaiser, J.G. Peacey, E.J. Chin, "Noranda anode baking Furnace - Design and performance",exposés des sessions techniques tenues lors du 113ème rencontres annuelles de Light Metals, Los Angeles, Californie, USA, du 27 février au 1er mars 1984, une publication de "The metallurgical society of AIME", 5 pages
- Dessin industriel "Fundamentplan" (Plan des fondations) No 59.0. 00009 b de la société Ludwig Riedhammer GmbH daté du 28.02.77
- Dessin industriel "Dispositionsplan, Ofen Nr. 1" (Disposition générale, four No 1) No 59.0.00164 de la société Riedhammer Industrieoefen daté du 15.09.78

## Description

### DOMAINE TECHNIQUE

L'invention concerne un four à feu tournant pour la cuisson des produits carbonés et notamment des anodes carbonées utilisées pour la production d'aluminium par électrolyse selon le procédé Hall-Héroult.

### ETAT DE LA TECHNIQUE

Les fours à feu tournant, tels que celui décrit dans la demande européenne EP-A-0 541 165, comportent généralement 2 rangées parallèles de chambres juxtaposées de forme rectangulaire dans lesquelles s'effectue la cuisson des anodes ou autres produits carbonés crus. Ces chambres, séparées par des murs transversaux, et dont le fond et les cloisons latérales sont isolées thermiquement par un briquetage isolant, sont subdivisées en plusieurs compartiments ou alvéoles contenant les produits à cuire. Ces alvéoles sont séparées par des cloisons creuses à parois minces disposées parallèlement au grand axe du four. Dans ces cloisons creuses circulent des gaz chauds, dont la température peut atteindre 1150 voire 1200°C. Ils sont formés pour l'essentiel par les gaz de combustion engendrés par une ou plusieurs rampes de brûleurs que l'on déplace d'une chambre vers la suivante au fur et à mesure que la cuisson s'effectue.

On distingue souvent parmi les fours à feu tournant, les fours à chambres de type ouvert et les fours à chambres de type fermé. La différence réside principalement dans les caractéristiques constructives du briquetage intérieur conduisant à divers cheminements des gaz chauds en circulation autour des alvéoles contenant les charges à cuire, mais l'organisation générale de ces fours à feu tournant reste la même avec l'existence de 2 rangées de chambres parallèles, dont la longueur peut atteindre près de 200 mètres, reliées à leurs extrémités par des carneaux.

Ces rangées de chambres parallèles isolées thermiquement sur 3 faces (isolations latérales + fond) sont contenues dans un cuvelage en béton formé d'un radier horizontal ou fond de cuve et de 2 murs ou voiles verticaux latéraux. A ce stade 2 modes de construction sont possibles avec leurs avantages et leurs inconvénients respectifs en mettant en oeuvre :
- soit un cuvelage unique renfermant les 2 rangées de chambres et leurs isolations; configuration souvent adoptée pour les fours à chambres de type fermé;
- soit un cuvelage double, chaque cuvelage renfermant une rangée de chambres; configuration souvent adoptée pour les fours à chambres de type ouvert.

Il s'agit là d'une différence constructive importante mais qui n'est pas liée au type de fours à chambres; en d'autres termes, un four de type fermé à double cuvelage est tout à fait réalisable au même titre qu'un four de type ouvert à cuvelage unique.

L'avantage du cuvelage unique est sa grande compacité et donc le gain de place qui en résulte ainsi que l'économie qu'il entraîne sur le plan des coûts d'investissements, mais ceci au détriment de la bonne tenue et donc de la longévité des briquetages isolants qui sont disposés entre les 2 rangées de chambres. En effet ces briquetages supportent des contraintes thermiques et mécaniques importantes du fait de l'amplitude des variations de température auxquelles ils sont soumis et des poussées exercées par les chambres situées de part et d'autre de ces briquetages. En raison des difficultés d'assurer un refroidissement efficace de cette zone centrale, le refroidissement du cuvelage unique se limite dans la plupart des fours industriels à cuvelage unique à une simple ventilation naturelle des murs ou voiles extérieurs du cuvelage. Ce traitement thermique différencié de la zone centrale par rapport aux zones extérieures engendre de surcroît des contraintes mécaniques et thermiques créées par le gradient thermique élevé existant entre les chambres en vis à vis situées dans chacune des 2 rangées de chambres constituant le four.

L'avantage majeur de la cuve double est que la charge constituée par la rangée de chambres, est traitée de manière symétrique par rapport à son axe longitudinal. En particulier les voiles intérieurs sont refroidis comme les voiles extérieurs dans le cas le plus fréquent où il y a une ventilation naturelle assurée notamment par des canaux de circulation ou voûtains qui refroidissentr le fond du four. Cette configuration permet donc de prolonger la durée de vie des briquetages avec toutefois les inconvénients d'un coût de réalisation plus élevé et d'un plus grand encombrement au sol à capacité de production identique.

### PROBLEME POSE

La réalisation d'un four à chambres pour la cuisson des produits carbonés présentant simultanément les avantages des fours à cuvelage unique et à cuvelage double à savoir : d'une part un encombrement limité et un coût de réalisation modéré, d'autre part une grande longévité des briquetages notamment des briquetages centraux, demeure un problème mal résolu pour le constructeur ou l'utilisateur de four à feu tournant.

### OBJET DE L'INVENTION

L'invention apporte une solution à ce problème. Elle concerne plus précisément un four à feu tournant pour la cuisson de produits carbonés comportant notamment 2 rangées parallèles de chambres de cuisson placées avec leur propre isolation thermique conjointement ou séparément dans un cuvelage, de préférence en béton, refroidi au moins par ventilation de ses murs latéraux extérieurs ou voiles extérieurs caractérisé en ce que les 2 rangées parallèles de chambres de cuisson sont séparées par un voile intérieur qui est refroidi spécifiquement et rendu solidaire du fond du cuvelage ou radier.

Ce voile intérieur, dont l'épaisseur varie notamment en fonction de la nature des matériaux utilisés pour sa construction, comporte un réseau de conduits verticaux, horizontaux ou de toute autre géométrie autorisant la circulation d'un fluide refroidisseur liquide ou gazeux, permettant d'abaisser la température du ou des matériaux constitutifs du voile central à une valeur acceptable par lesdits matériaux. De préférence le voile intérieur est formé par 2 montants verticaux d'épaisseur identique, symétriques par rapport à l'axe vertical de symétrie, liés à leurs extrémités inférieures au fond du cuvelage ou radier. Ces montants sont maintenus à écartement fixe par des entretoises verticales ou horizontales de manière à créer des couloirs verticaux ou horizontaux dans lesquels circule le fluide refroidisseur, qui est de préférence de l'air de ventilation fourni par des moyens de ventilation appropriés. En général les entretoises sont constituées du même matériau que les montants verticaux.

Par moyens de ventilation appropriés, il faut comprendre aussi bien des moyens de ventilation naturelle, de ventilation forcée ou de ventilation mixte. Ces moyens de ventilation sont regroupés avec les autres moyens auxiliaires indispensables à la conduite du four, notamment moyens de contrôle et de régulation et moyens de levage et de manutention, dans le bâtiment qui abrite le four.

### DESCRIPTION

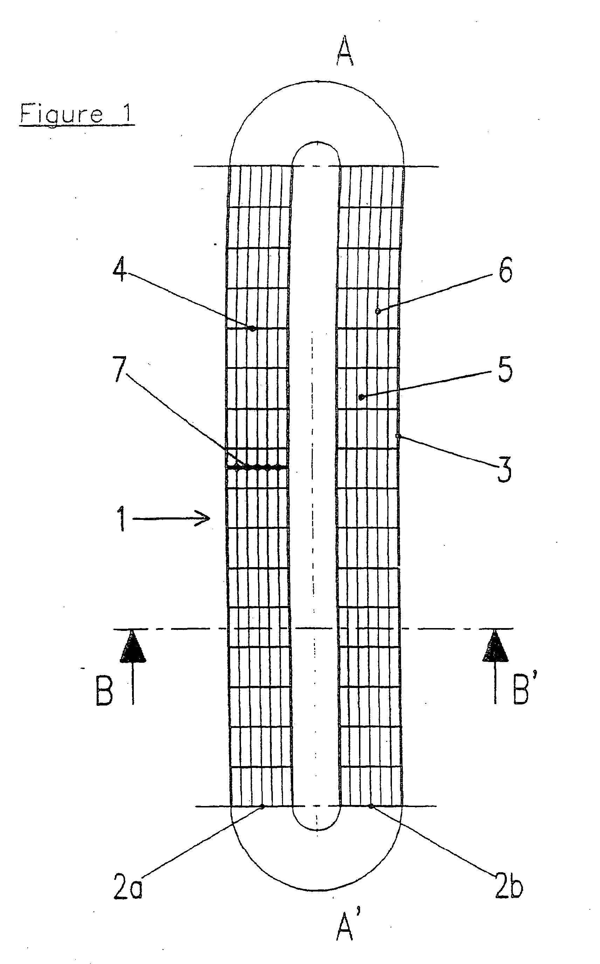

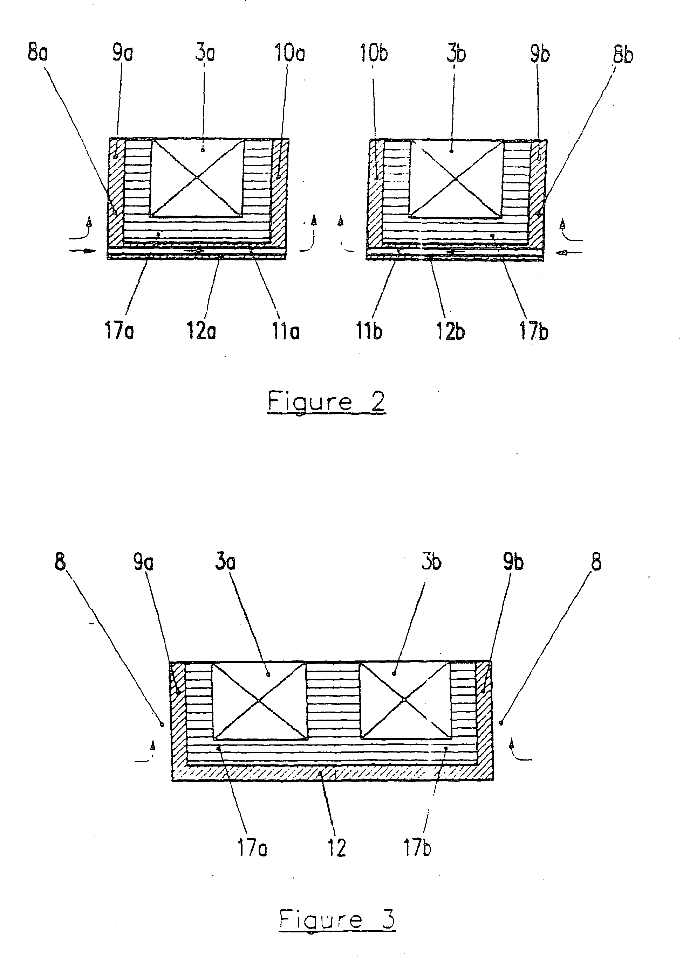

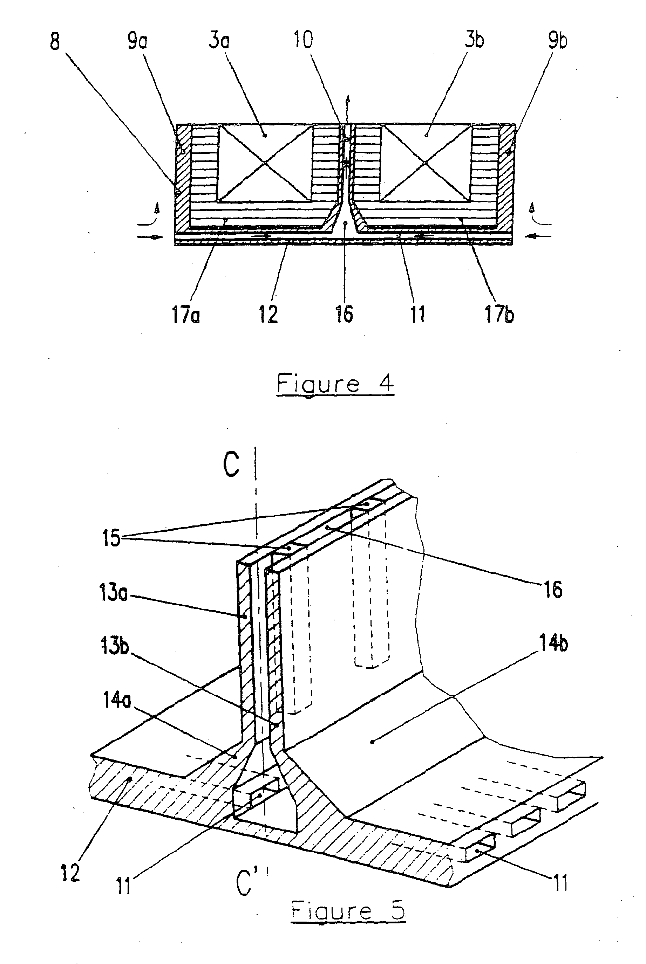

L'invention sera mieux comprise par la description détaillée ci-après illustrée par les figures suivantes :
. Fig.1 représentation schématique en vue de dessus d'un four à feu tournant à cuvelage double selon l'art antérieur.
. Fig.2 représentation schématique en coupe transversale selon B,B' du four à cuvelage double de la fig.1 selon l'art antérieur.
. Fig.3 représentation schématique en coupe transversale d'un four à cuvelage unique selon l'art antérieur.
. Fig.4 représentation schématique en coupe transversale d'un four à feu tournant avec un voile interne ventilé selon l'invention.
. Fig.5 représentation en perspective coupée du voile interne ventilé.

La figure 1 est représentative d'un four à feu tournant 1 comportant 2 rangées parallèles 2a et 2b de chambres 3 juxtaposées de forme rectangulaire séparées par des murs transversaux 4 et subdivisées en alvéoles 5 contenant le produit à cuire. Ces alvéoles sont séparées par des cloisons creuses 6 à parois minces parallèles au grand axe A,A' du four dans lesquelles circulent les gaz destinés à chauffer les charges (non représentées) placées dans les alvéoles. Ces gaz chauds sont principalement des gaz de combustion engendrés par une ou plusieurs rampes 7 de brûleurs que l'on déplace d'une chambre vers la suivante au fur et à mesure que la cuisson du produit s'effectue.

Selon la figure 2 les 2 cuvelages en béton 8a et 8b contiennent respectivement les chambres 3a et 3b avec leur isolation thermique 17a et 17b. Les voiles extérieurs 9a et 9b ainsi que les 2 voiles intérieurs 10a et 10b des 2 cuvelages sont refroidis par ventilation naturelle ainsi que les 2 radiers 12a et 12b équipés de voûtains 11a et 11b. La distance entre les 2 faces externes des voiles intérieurs est de l'ordre de 2 à 3 mètres pour permettre une aération suffisante des 2 cuvelages par tirage naturel.

Selon la figure 3, les 2 rangées parallèles 2a et 2b de chambres 3a, 3b sont contenues avec leur isolation thermique respective 17a et 17b dans un cuvelage unique 8 en béton formé par 2 voiles verticaux extérieurs 9a, 9b reposant sur un radier 12 en béton. Dans cette configuration la fréquence des interventions de maintenance sur les briquetages centraux est beaucoup plus élevée que celle constatée pour les briquetages de chambres ayant leur cuvelage individuel ce qui, indépendamment du coût direct d'entretien plus élevé, peut conduire à une limitation de la capacité de production.

A noter en revanche qu'à capacité de production égale, la réduction de largeur d'environ 3 mètres d'un four à cuvelage unique par rapport à un four à cuvelage double permet une diminution de surface d'occupation au sol de 300 à 600 m² suivant la longueur du four.

Selon les figures 4 et 5 représentatives d'un four à feu tournant à voile central ventilé de l'invention, on interpose entre les isolations thermiques 17a et 17b des chambres 3a et 3b, et plus précisément entre les briquetages centraux, un voile central vertical ou voile intérieur 10, de préférence en béton, dont l'épaisseur totale varie en fonction de la capacité du four et plus précisément de l'importance des flux thermiques à évacuer, mais aussi de la nature du matériau utilisé et notamment de ses propriétés thermomécaniques, résistances à l'écrasement et au choc thermique, conductibilité thermique ... Ce voile 10 a une épaisseur totale dans ses parties centrale et supérieure comprise entre 200 et 900 mm et de préférence entre 400 et 600 mm. Il s'élargit en général progressivement à sa base en appui sur le fond de cuvelage ou radier 12. Le voile 10, réalisé la plupart du temps en béton identique à celui du cuvelage 8, est formé de préférence par 2 montants verticaux 13 et 13b d'épaisseur identique, symétriques par rapport à l'axe vertical CC'. Ces montants 13a, 13b solidaires à leurs extrémités inférieures 14a, 14b du radier 12, sont maintenues à écartement constant "e" par des entretoises de préférence verticales ou horizontales 15 de section rectangulaire de 2 à 10 dm² placées à espacement régulier entre les 2 montants pour en limiter la déformation, mais aussi pour former des couloirs 16 verticaux ou horizontaux communiquant à leurs extrémités avec des moyens de ventilation non représentés, ladite ventilation pouvant être naturelle, forcée ou mixte.

L'écartement entre 2 cloisons définies par les entretoises verticales ou horizontales 15 est compris entre 50 et 500 mm, mais de préférence entre 100 et 300 mm, de manière à assurer une ventilation suffisante dans un volume minimum. Quant à l'espacement des entretoises 15, il est déterminé en fonction des contraintes de déformation auxquelles sont soumises lesdits montants sous l'effet notamment des charges et de la température. Cet espacement est le plus souvent compris entre 0,5 et 1 mètre.

Selon cette configuration nouvelle, le voile intérieur 10 refroidi et d'épaisseur limitée n'entraîne donc pas, toutes choses égales par ailleurs, d'élargissement important du four à feu tournant, comme c'est le cas avec le four à double cuvelage. En revanche, étant refroidi naturellement, ou de façon forcée par ventilation d'air, ou par tout autre fluide refroidisseur, il permet de recréer la symétrie mécanique et thermique qui fait défaut à la cuve unique.

Le choix du mode de ventilation dépend principalement de l'importance du flux thermique à évacuer de la zone centrale du four pour limiter les pointes de température dans le briquetage. Pour un four de grande capacité, il y aura avantage à mettre en oeuvre un groupe de ventilation forcée suffisamment puissant pour injecter de l'air frais, de préférence du bas vers le haut des couloirs 16 verticaux du voile intérieur 10, éventuellement par l'intermédiaire des voûtains 11 du radier, et cela en conservant pour les voiles extérieurs 9a, 9b, une ventilation naturelle.

La ventilation forcée peut être réalisée aussi par injection d'air frais dans les couloirs 16 horizontaux, c'est-à-dire longitudinalement d'une extrémité du voile intérieur 10 à l'autre extrémité. L'injection d'air frais par soufflage ou aspiration est effectuée à l'aide de moyens mécaniques appropriés, tels que ventilateurs ou extracteurs, situés à une extrémité du four.

### EXEMPLES D'APPLICATION

Pour les avantages cumulés précédemment énumérés, ce nouveau concept de four à feu tournant s'applique évidemment à la construction de fours neufs qu'ils soient ouverts ou fermés, mais il trouve aussi des applications intéressantes dans la transformation de fours existants dont il convient d'améliorer les performances à l'occasion d'une rénovation.

Ainsi, dans le cas d'un four ouvert à double cuvelage à rénover, on peut aisément, à encombrement au sol constant, raccorder les 2 radiers 12a, 12b et rapprocher les 2 voiles internes 10a et 10b qui font alors fonction de montants 13a et 13b en conservant simplement un espacement suffisant pour former une cheminée 16 de circulation d'air communiquant à sa partie inférieure avec les voûtains existants 11. On peut ainsi augmenter la largeur des 2 rangées de chambres de 1 à 2 mètres et par suite augmenter le volume de la charge à cuire de 10 à 20%.

De même dans le cas d'un four fermé à cuvelage unique que l'on veut transformer en four ouvert par exemple pour en augmenter la capacité. Il est possible de réaliser cet objectif sans accroître l'encombrement au sol en appliquant le concept de l'invention qui consiste ici à interposer un voile ventilé interne 10 de 400 à 600 mm d'épaisseur, lié au radier 12 selon l'invention. Le voile central n'occupant qu'une partie très limitée du volume utile apporté par le cuvelage du four fermé, on bénéficie totalement de l'augmentation de capacité de production procurée par le four ouvert grâce à son meilleur rapport volume charge à cuire/volume briquetage et cela à encombrement au sol constant.

## Revendications

1. Four à feu tournant (1) pour la cuisson de produits carbonés comportant notamment 2 rangées (2a, 2b) parallèles de chambres de cuisson (3a, 3b) placées avec leur propre isolation thermique (17a, 17b) conjointement ou séparément dans un cuvelage 8, généralement en béton, refroidi au moins par ventilation de ses 2 murs ou voiles extérieurs (9a, 9b) **caractérisé en ce que** les 2 rangées (2a, 2b) de chambres de cuisson (3a, 3b) sont séparées par un voile intérieur (10) qui est refroidi spécifiquement et rendu solidaire du fond du cuvelage ou radier (12), et **en ce que** le voile intérieur (10) refroidi comporte un réseau de conduits ou couloirs (16) verticaux, horizontaux, ou de toute autre géométrie, autorisant la circulation d'un fluide refroidisseur, liquide ou gazeux.

2. Four à feu tournant selon la revendication 1 **caractérisé en ce que** le voile intérieur (10) est formé par 2 montants verticaux 13a, 13b) d'épaisseur identique, symétriques par rapport à l'axe vertical CC', solidaires à leurs extrémités inférieures (14a, 14b) du radier (12) et maintenus à écartement constant "e" par des entretoises (15) verticales ou horizontales placées à espacement régulier pour former des couloirs (16) verticaux ou horizontaux.

3. Four à feu tournant selon la revendication 2 **caractérisé en ce que** le voile intérieur (10) a une épaisseur totale dans ses parties centrale et supérieure comprise entre 200 et 900 mm et de préférence entre 400 et 600 mm.

4. Four à feu tournant selon la revendication 2 **caractérisé en ce que** l'écartement "e" entre les 2 montants (13a, 13b) est 50 mm < e < 500 mm et de préférence 100 mm ≤ e ≤ 300 mm.

5. Four à feu tournant selon la revendication 2 **caractérisé en ce que** l'espacement régulier des entretoises (15) est compris entre 0,5 et 1 mètre.

6. Four à feu tournant selon la revendication 2 **caractérisé en ce que** les montants (13a, 13b) sont en béton identique à celui du cuvelage (8).

7. Four à feu tournant selon l'une quelconque des revendications 1 à 6 **caractérisé en ce que** le refroidissement du voile intérieur (10) est assuré par circulation d'air dans les couloirs (16) communiquant à leurs extrémités avec des moyens de ventilation naturelle, forcée ou mixte.

8. Four à feu tournant selon la revendication 1 ou 7 **caractérisé en ce que** la ventilation forcée est réalisée par injection d'air frais du bas vers le haut dans les couloirs (16) verticaux du voile intérieur (10) éventuellement par l'intermédiaire des voûtains (11) du radier, alors que les voiles extérieurs (9a, 9b) sont refroidis par ventilation naturelle.

9. Four à feu tournant selon la revendication 1 ou 7, **caractérisé en ce que** la ventilation forcée est réalisée par injection d'air frais, longitudinalement d'une extrémité du voile intérieur (10) à l'autre extrémité, dans les couloirs (16) horizontaux.

10. Four à feu tournant selon la revendication 9, **caractérisé en ce que** la ventilation forcée est réalisée par soufflage ou aspiration d'air frais, à l'aide de moyens mécaniques appropriés situés à une extrémité du four.

## Claims

1. Baking ring furnace (1) used to bake carbonaceous compounds made notably of two parallel rows (2a, 2b) of baking chambers (3a, 3b) placed with their own thermal insulation (17a, 17b) jointly or separately in a basin 8, usually made of cement, cooled at least by ventilation of its two exterior walls or partitions (9a, 9b) **characterized by** the fact that the two parallel rows (2a, 2b)of baking chambers (3a, 3b) are separated by a unique interior partition (10) which is specifically cooled and made firmly attached to the bottom of the basin (12), and that the cooled interior partition (10) comprises a network of vertical, horizontal or any other geometric shape ducts or passages (16) allowing the circulation of a cooling liquid or gaseous fluid.

2. Baking ring furnace according to claim 1 **characterized by** the fact that the interior partition (10) is made of two vertical members (13a, 13b) of identical thickness, symmetrical compared to the vertical axis CC', attached at their lower ends (14a, 14b) to the bottom of the basin (12) and maintained at a fixed spacing "e" by vertical or horizontal spacers (15) placed at fixed intervals in order to create vertical or horizontal passages (16).

3. Baking ring furnace according to claim 2 **characterized by** the fact that the interior partition (10) has a total width in its central and higher parts comprising between 200 and 900 mm and preferably 400 and 600 mm.

4. Baking ring furnace according to claim 2 **characterized by** the fact that the spacing "e" between the two members (13a, 13b) is 50 mm <e<500 mm and preferably 100 mm ≤ e ≤300 mm.

5. Baking ring furnace according to claim 2 **characterized by** the fact that the regular space between the spacers (15) is between 0.5 and 1 meter.

6. Baking ring furnace according to claim 2 **characterized by** the fact that the members (13a, 13b) are made of the same cement as the basin (8).

7. Baking ring furnace according to any of claims 1 to 6 **characterized by** the fact that the cooling of the interior partition (10) is insured by circulation of air in the passages (16) communicating at their ends with natural ventilation means, forced or mix.

8. Baking ring furnace according to claims 1 or 7 **characterized by** the fact that the forced ventilation is realized by injection of cool air, from the bottom to the top of the vertical passages (16) of the interior partition (10), optionally using the ventilation ducts (11) of the basin whereas the exterior walls (9a, 9b) are cooled by natural ventilation.

9. Baking ring furnace according to claims 1 or 7 **characterized by** the fact that the forced ventilation is realized by injection of cool air, longitudinally from one end of the interior partition (10) to the other, in the horizontal passages (16).

10. Baking ring furnace according to claim 9, **characterized by** the fact that the forced ventilation is done by blowing or aspiration of cool air using appropriate mechanical means situated at one end of the furnace.

## Patentansprüche

1. Ringkammerofen (1) zum Brennen kohlenstoffhaltiger Produkte, umfassend insbesondere zwei parallele Reihen (2a, 2b) von Brennkammern (3a, 3b), die mit ihrer eigenen Wärmeisolierung (17a, 17b) zusammen oder getrennt in einer üblicherweise aus Beton bestehenden Ausmauerung (8) angeordnet sind, welche zumindest durch Lüftung ihrer beiden Mauern oder Außenwände (9a, 9b) gekühlt wird, **dadurch gekennzeichnet, dass** die zwei Reihen (2a, 2b) von Brennkammern (3a, 3b) durch eine Innenwand (10) getrennt sind, welche spezifisch gekühlt wird und mit dem Boden der Ausmauerung oder Sohle (12) fest verbunden ist, und dass die gekühlte Innenwand (10) ein Netz aus vertikalen, horizontalen oder geometrisch beliebig anders angeordneten Leitungen oder Kanälen (16) aufweist, welche die Zirkulation eines flüssigen oder gasförmigen Kühlmediums gestatten.

2. Ringkammerofen nach Anspruch 1, **dadurch gekennzeichnet, dass** die Innenwand (10) aus zwei gleich dicken, vertikalen Stützen (13a, 13b) gebildet ist, welche in Bezug auf die vertikale Achse CC' symmetrisch sind, mit ihren unteren Enden (14a, 14b) fest mit der Sohle (12) verbunden sind und durch vertikale und horizontale Abstandsstücke (15), welche zur Bildung vertikaler oder horizontaler Kanäle (16) in regelmäßiger Entfernung voneinander angeordnet sind, in konstantem Abstand "e" gehalten werden.

3. Ringkammerofen nach Anspruch 2, **dadurch gekennzeichnet, dass** die Innenwand (10) in ihrem mittleren und oberen Bereich eine Gesamtdicke von 200 bis 900 mm und vorzugsweise von 400 bis 600 mm aufweist.

4. Ringkammerofen nach Anspruch 2, **dadurch gekennzeichnet, dass** der Abstand "e" zwischen den zwei Stützen (13a, 13b) 50 mm < e < 500 mm und vorzugsweise 100 mm ≤ e ≤ 300 mm beträgt.

5. Ringkammerofen nach Anspruch 2, **dadurch gekennzeichnet, dass** die regelmäßige Entfernung zwischen den Abstandsstücken (15) 0,5 bis 1 Meter beträgt.

6. Ringkammerofen nach Anspruch 2, **dadurch gekennzeichnet, dass** die Stützen (13a, 13b) aus dem gleichen Beton wie die Ausmauerung (8) sind.

7. Ringkammerofen nach irgendeinem der Ansprüche 1 bis 6, **dadurch gekennzeichnet, dass** die Kühlung der Innenwand (10) durch Luftzirkulation in den Kanälen (16) erfolgt, die endseitig mit Mitteln zur natürlichen, Fremd- oder gemischten Belüftung verbunden sind.

8. Ringkammerofen nach Anspruch 1 oder 7, **dadurch gekennzeichnet, dass** die Fremdbelüftung durch Einblasen von Frischluft von unten nach oben in die vertikalen Kanäle (16) der Innenwand (10) erfolgt, gegebenenfalls über die Gewölbekappen (11) der Sohle, während die Außenwände (9a, 9b) durch natürliche Belüftung gekühlt werden.

9. Ringkammerofen nach Anspruch 1 oder 7, **dadurch gekennzeichnet, dass** die Fremdbelüftung durch Einblasen von Frischluft in die horizontalen Kanäle (16) in Längsrichtung von einem Ende der Innenwand (10) zum anderen erfolgt.

10. Ringkammerofen nach Anspruch 9, **dadurch gekennzeichnet, dass** die Fremdbelüftung durch Einblasen oder Absaugen von Frischluft mit Hilfe geeigneter, an einem Ende des Ofens angeordneter Mittel erfolgt.
